# EUROPÄISCHE PATENTSCHRIFT

(11) **EP 4 291 832 B1**
(45) Veröffentlichungstag und Bekanntmachung des Hinweises auf die Patenterteilung: **22.04.2026**
(21) Anmeldenummer: 22705994.6
(22) Anmeldetag: 01.02.2022
(51) Int. Cl.: F24F 13/24, F25B 30/02, F16F 7/00

(54) **WÄRMEPUMPE**
HEAT PUMP
POMPE À CHALEUR

(30) Priorität: 10.02.2021 DE 102021103063
(43) Veröffentlichungstag der Anmeldung: 20.12.2023
(73) Patentinhaber: Viessmann Holding International GmbH, 35108 Allendorf (Eder) (DE)
(72) Erfinder: SCHMIDT, Thorsten, 35041 Marburg (DE); LANG, Eduard, 35108 Allendorf (DE)
(74) Vertreter: Wolf & Wolf Patentanwaltsgesellschaft mbH
(86) Internationale Anmeldenummer: PCT/DE2022/100087
(87) Internationale Veröffentlichungsnummer: WO 2022/171243

(56) Entgegenhaltungen:
- WO-A1-2019/211894
- CN-U- 207 662 015
- DE-T2- 60 029 497
- KR-A- 20180 070 050
- US-B1- 6 260 373

## Beschreibung

Die Erfindung betrifft eine Wärmepumpe gemäß dem Oberbegriff des Patentanspruchs 1.

Eine Wärmepumpe der eingangs genannten Art ist aus dem Dokument DE 10 2018 115 749 A1 bekannt. Diese Wärmepumpe besteht aus einem Verdichter zum Verdichten eines Kältemittels und einer weiteren, vom Kältemittel durchströmten Wärmepumpenkomponente, wobei der Verdichter zur Führung des Kältemittels über Fluidleitungen mit der weiteren Wärmepumpenkomponente verbunden ausgebildet ist und wobei der Verdichter und die weitere Wärmepumpenkomponente zur Reduktion einer Übertragung von Körperschall über Federelemente mit einem Gehäuse der Wärmepumpe verbunden ausgebildet sind. Bei dieser Lösung sind der Verdichter und die weitere Wärmepumpenkomponente auf einem gemeinsamen Tragelement angeordnet.

Der Erfindung liegt die Aufgabe zugrunde, eine Wärmepumpe der eingangs genannten Art zu verbessern. Insbesondere soll eine Wärmepumpe mit noch besser entkoppeltem Verdichter geschaffen werden.

Diese Aufgabe ist mit einer Wärmepumpe der eingangs genannten Art durch die im Kennzeichen des Patentanspruchs 1 aufgeführten Merkmale gelöst.

Nach der Erfindung ist also vorgesehen, dass der Verdichter und die weitere Wärmepumpenkomponente miteinander ausschließlich einerseits über die sie verbindenden Fluidleitungen und andererseits über die mit dem Gehäuse der Wärmepumpe verbundenen Federelemente fest verbunden ausgebildet sind.

Mit anderen Worten zeichnet sich die erfindungsgemäße Lösung somit dadurch aus, dass der Verdichter und die weitere Wärmepumpenkomponente so wenig wie möglich miteinander in Verbindung stehen, um einen Übertragung von Körperschall so gut es geht bzw. möglich ist, zu unterdrücken. Die verwendete Maßgabe "fest verbunden" bedeutet dabei, dass neben den genannten Verbindungen und trotz der Maßgabe "ausschließlich" zum Beispiel eine weitere Verbindung über eine elektrische Leitung, einen Gummischlauch oder dergleichen möglich ist, da eine solche, im Grunde sehr elastische Verbindung nicht als feste, Körperschall übertragende Verbindung anzusehen ist.

Der Vollständigkeit halber wird noch auf die Lösung gemäß dem Dokument US 6,260,373 B1 hingewiesen, die sich von der beanspruchten Lösung aber insbesondere dadurch unterscheidet, dass der Verdichter und die Wärmepumpenkomponente bei der vorbekannten Lösung gerade nicht über separate Federelemente mit dem Gehäuse verbunden ausgebildet sind.

Andere vorteilhafte Weiterbildungen der erfindungsgemäßen Wärmepumpe ergeben sich aus den abhängigen Patentansprüchen.

Die erfindungsgemäße Wärmepumpe einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: schematisch die erfindungsgemäße Wärmepumpe mit einem entkoppelten Verdichter;
- Figur 2: perspektivisch eine Wärmepumpe mit einem Tragelement für die Wärmepumpenkomponenten;
- Figur 3: in Seitenansicht den auf einem Lastabtragelement positionierten Verdichter der Wärmepumpe gemäß Figur 2;
- Figur 4: in Seitenansicht das auf einem Lastabtragelement positionierte Tragelement mit den Wärmepumpenkomponenten der Wärmepumpe gemäß Figur 2;
- Figur 5: schematisch eine Wärmepumpe mit einer in alle Richtungen gewundenen Fluidleitung zwischen dem Verdichter und einer Wärmepumpenkomponente;
- Figur 6: einen Schnitt durch die Fluidleitung gemäß Figur 5; und
- Figur 7: schematisch eine Wärmepumpe mit einer wie ein Starrkörper ausgebildeten Einheit aus Tragelement und Wärmepumpenkomponenten.

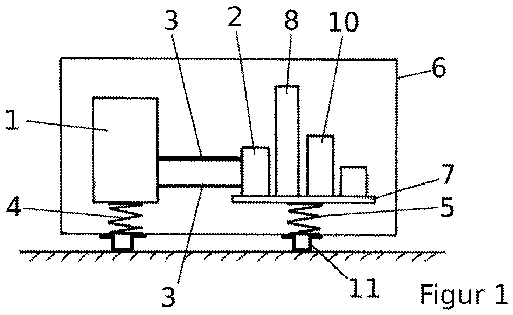

Die in Figur 1 dargestellte Wärmepumpe besteht in an sich bekannter Weise aus einem Verdichter 1 zum Verdichten eines Kältemittels und einer weiteren, vom Kältemittel durchströmten Wärmepumpenkomponente 2, wobei der Verdichter 1 zur Führung des Kältemittels über Fluidleitungen 3 mit der weiteren Wärmepumpenkomponente 2 verbunden ausgebildet ist und wobei der Verdichter 1 und die weitere Wärmepumpenkomponente 2 zur Reduktion einer Übertragung von Körperschall über Federelemente 4, 5 mit einem Gehäuse 6 der Wärmepumpe verbunden ausgebildet sind.

Dabei ist bevorzugt vorgesehen, dass die in Figur 1 nur schematisch dargestellten Federelemente 4, 5 (tatsächlich) mindestens teilweise aus einem Elastomer, insbesondere Polyurethanschaum, also als elastische Isolierelemente gebildet sind.

Ferner ist bevorzugt vorgesehen, dass eine erste Fluidleitung 3 als Kältemittelzufuhrleitung zum Verdichter 1 und eine zweite Fluidleitung 3 als Kältemittelabfuhrleitung vom Verdichter 1 ausgebildet ist.

Weiterhin ist bevorzugt vorgesehen, dass die Fluidleitungen 3 wahlweise aus einem Material mit einer Steifigkeit wie ein metallisches Material und/oder aus einem metallischen Material gebildet sind. Die Fluidleitungen 3 bestehen bei der erfindungsgemäßen Lösung somit insbesondere nicht aus einem Kunststoff- oder Gummimaterial.

Wesentlich für die erfindungsgemäße Wärmepumpe ist nun, dass der Verdichter 1 und die weitere Wärmepumpenkomponente 2 miteinander ausschließlich einerseits über die sie verbindenden Fluidleitungen 3 und andererseits über die mit dem Gehäuse 6 der Wärmepumpe verbundenen Federelemente 4, 5 fest verbunden ausgebildet sind. Wie eingangs erläutert, führt diese Maßgabe zu einer besonders guten Entkopplung des Verdichters von den anderen Wärmepumpenkomponenten und damit zu einer sehr geräuscharmen Wärmepumpe.

Noch etwas genauer betrachtet, ist besonders bevorzugt vorgesehen, dass die weitere Wärmepumpenkomponente 2 als Ventileinrichtung, insbesondere als Mehrwegeventil, ausgebildet ist.

Weiterhin ist besonders bevorzugt vorgesehen, dass die weitere Wärmepumpenkomponente 2 auf einem Tragelement 7 positioniert ist. Dabei ist weiterhin bevorzugt vorgesehen, dass das Tragelement 7 über die Federelemente 5 mit dem Gehäuse 6 der Wärmepumpe verbunden ausgebildet ist. Ferner ist noch bevorzugt vorgesehen, dass noch weitere Wärmepumpenkomponenten der Wärmepumpe, wie ein Wärmeübertrager 8, eine Expansionseinrichtung 9 und/oder ein Kältemittelsammler 10, auf dem Tragelement 7 positioniert sind. Diese weiteren, passiven (weil nicht selbst Schwingungen produzierenden) Wärmepumpenkomponenten bilden dabei vorteilhaft, wie ersichtlich, auf dem Tragelement 7 eine integrierte Baugruppe, die letztlich nur über die Fluidleitungen 3 zum Schwingen angeregt wird.

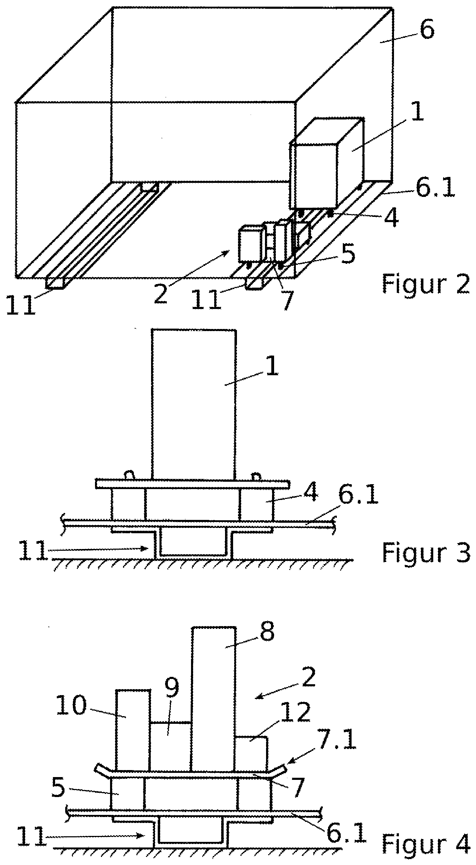

Ferner ist weiterhin bevorzugt vorgesehen:
Die in den Figuren 2 bis 4 dargestellte Wärmepumpe besteht aus dem Gehäuse 6, mindestens einem an einer Unterseite 6.1 des Gehäuses 6 angeordneten Lastabtragelement 11, dem im Gehäuse 6 senkrecht oberhalb des Lastabtragelements 11 angeordneten Verdichter 1 und weiteren, ebenfalls im Gehäuse 6 angeordneten Wärmepumpenkomponenten 2, wobei zwischen dem Verdichter 1 und dem Lastabtragelement 11 ein elastisches Isolierelement (Federelement 4) angeordnet ist.

Bei dieser Wärmepumpe ist bevorzugt, dass mehrere Wärmepumpenkomponenten 2 auf dem gemeinsamen, senkrecht oberhalb eines Lastabtragelements 11 angeordneten Tragelement 7 positioniert sind, wobei zwischen dem Tragelement 7 und dem Lastabtragelement 11 ein weiteres elastisches Isolierelement (Federelement 5) angeordnet ist.

Es ist dabei bevorzugt, dass die Unterseite 6.1 des Gehäuses 6 aus einem zwischen dem Lastabtragelement 11 und dem elastischen Isolierelement (bzw. den elastischen Isolierelementen) angeordneten Blech gebildet ist, siehe Figuren 3 und 4. Des Weiteren ist bevorzugt, dass das elastische Isolierelement mindestens teilweise aus einem Elastomer, vorzugsweise aus Polyurethanschaum, gebildet ist. Außerdem ist bevorzugt, dass der Verdichter 1 über mindestens drei (vorzugsweise auf den Ecken eines gedachten Dreiecks angeordnete) elastische Isolierelemente mit dem Lastabtragelement 11 verbunden ausgebildet ist.

Weiterhin ist bevorzugt, dass an der Unterseite 6.1 des Gehäuses 6 zwei Lastabtragelemente 11, vorzugsweise parallel zueinander, angeordnet sind. Ebenso ist das Lastabtragelement 11 vorzugsweise mindestens dreimal, vorzugsweise sechsmal, besonders bevorzugt achtmal, länger als breit bzw. hoch ausgebildet und/oder ist das Lastabtragelement 11 vorzugsweise als aus Blech gebildete Profilschiene ausgebildet. Zusätzlich ist bevorzugt, dass der Verdichter 1 und das Tragelement 7 dem gleichen Lastabtragelement 11 zugeordnet sind, siehe Figur 2.

Zudem ist bevorzugt, dass auf dem Tragelement 7 wahlweise ein Wärmeübertrager 8, vorzugsweise ein Plattenwärmeübertrager, eine Expansionseinrichtung 9, eine Ventileinrichtung 12 und/ oder ein Kältemittelsammler 10 angeordnet sind bzw. ist, siehe Figur 4. Ebenso ist bevorzugt, dass das Tragelement 7 plattenförmig, vorzugsweise aus Blech, ausgebildet ist. Dabei ist das plattenförmige Tragelement 7 randseitig mit Abkantungen 7.1 versehen ausgebildet. Dies dient der Versteifung des Tragelements 7 und fördert das Starrkörper-Schwingungsverhalten der Wärmepumpe. Weiterhin ist bevorzugt, dass die Wärmepumpenkomponenten 2 am Tragelement 7 befestigt angeordnet sind. Ferner ist das Tragelement 7 vorzugsweise und abgesehen vom Kontakt über die sich aus der Anordnung oberhalb des Lastabtragelements 11 ergebenden Standflächen im übrigen fixierungsfrei mit dem Lastabtragelement 11 verbunden ausgebildet. Dieser passive Block steht also letztlich einfach auf dem Lastabtragelement 11, wobei insbesondere allein durch die Verrohrung zum Verdichter 1 eine seitliche Verschiebung ausgeschlossen ist.

Die in den Figuren 2 bis 4 dargestellte Wärmepumpe weist somit in ihren oben beschriebenen Ausführungsformen ein Starrkörperverhalten auf, welches zu einer guten Dämmung der durch die Wärmepumpenkomponenten 2 und insbesondere den Verdichter 1 erzeugten tieffrequenten Schwingungen führt. Hierdurch wird die Lärmbelastung durch die Wärmepumpe wesentlich reduziert.

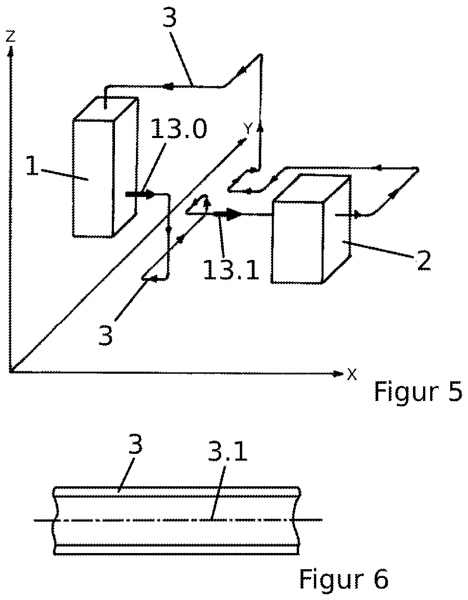

Die in Figur 5 schematisch dargestellte Wärmepumpe besteht aus einem Verdichter 1, der über zwei kältemittelführende Fluidleitungen 3 mit der kältemitteldurchströmten Wärmepumpenkomponente 2 verbunden ausgebildet ist, wobei jede Fluidleitung 3 eine Längsachse 3.1 aufweist (siehe hierzu Figur 6), wobei ein gedachter, mit der Längsachse 3.1 zusammenfallender Richtungsvektor 13.1 im Verlauf zwischen dem Verdichter 1 und der Wärmepumpenkomponente 2 mindestens einmal in eine andere Richtung als ein gedachter, am Verdichter 1 beginnender und dort ebenfalls mit der Längsachse 3.1 zusammenfallender Anfangsrichtungsvektor 13.0 weist, wobei die Längsachse 3.1 in einem Raum mit drei gedachten, senkrecht zueinander stehenden Ebenen XY, XZ, YZ verlaufend ausgebildet ist.

Um eine Schwingungsübertragung vom Verdichter 1, der vorzugsweise einen Elektromotor umfasst, auf die mindestens eine Wärmepumpenkomponente 2 so gut es geht zu unterdrücken, ist nun bevorzugt vorgesehen, dass die Fluidleitung 3 so geformt ist, dass der Richtungsvektor 13.1 im Verlauf zwischen dem Verdichter 1 und der Wärmepumpenkomponente 2 und in Bezug auf alle drei Ebenen XY, XZ, YZ mindestens einmal um einen Winkel von 180° gedreht zum Anfangsrichtungsvektor 4.0 verlaufend ausgebildet ist.

Diese Maßgabe führt insgesamt betrachtet zu einer Vergrößerung der Elastizität bzw. Verringerung der Steifigkeit der Fluidleitung zwischen dem Verdichter und der Wärmepumpenkomponente und damit zu einer reduzierten Schwingungsübertragung.

Weiterhin ist die Fluidleitung 3 vorzugsweise aus einem metallischen Werkstoff gebildet. Gegebenenfalls kommt vorzugsweise auch noch Kunststoff in Betracht. Je elastischer das tatsächlich verwendete Material der Fluidleitung aber an sich ist, desto weniger bedarf es logischer Weise des in den Figuren 5 und 6 gezeigten Ansatzes.

Zur Realisierung einer möglichst ungestörten Strömung des Kältemittels durch die Fluidleitung 3 ist ferner bevorzugt vorgesehen, dass diese an allen ihren gekrümmten Bereichen stetig gekrümmt ausgebildet ist. Der Begriff "stetig" ist hierbei mathematisch gemeint. Anders ausgedrückt, soll also vorgesehen sein, dass die Fluidleitung 3 keine scharfkantigen Knicke aufweist. In Figur 5 sind die Richtungsänderungen der Fluidleitung 3 entsprechend abgerundet dargestellt.

Weiterhin ist bevorzugt vorgesehen, dass die Fluidleitung 3 im Verlauf zwischen dem Verdichter 1 und der Wärmepumpenkomponente 2 mindestens teilweise wahlweise um den Verdichter 1 und/ oder die Wärmepumpenkomponente 2 herumgeführt ausgebildet ist. Diese Maßgabe, die weiter zur Reduktion einer Schwingungsübertragung beiträgt, gilt für die (wie die entsprechenden Pfeile verdeutlichen) von der Wärmepumpenkomponente 2 zum Verdichter 1 führende Fluidleitung 3.

Wie eingangs erwähnt, ist schließlich besonders bevorzugt vorgesehen, dass die Umlenkung der Fluidleitung 3 nicht nur um mindestens 180°, sondern vorzugsweise um mindesten 270° erfolgt. Ganz besonders bevorzugt ist vorgesehen, dass die Fluidleitung 3 so geformt ist, dass der Richtungsvektor 13.1 im Verlauf zwischen dem Verdichter 1 und der Wärmepumpenkomponente 2 und in Bezug auf eine der drei Ebenen XY, XZ, YZ eine vollständige 360°-Wendung im Vergleich zum Anfangsrichtungsvektor 13.0 vollziehend ausgebildet ist. In Figur 5 erfüllen beide dargestellten Fluidleitungen 3 genau diese Maßgabe.

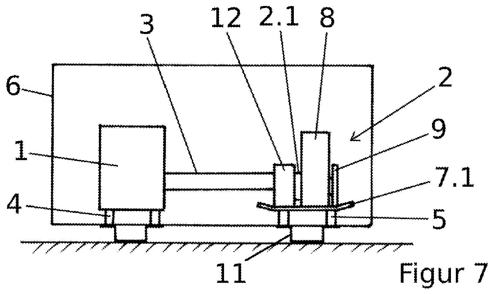

Die in Figur 7 dargestellte Wärmepumpe besteht in an sich bekannter Weise zunächst einmal aus einem innerhalb eines Betriebsdrehzahlbereichs arbeitenden und dabei mindestens eine Störfrequenz erster Ordnung verursachenden Verdichter 1 zum Verdichten eines Kältemittels und weiteren, auf dem Tragelement 7 angeordneten und ebenfalls vom Kältemittel durchströmten Wärmepumpenkomponenten 2.

Etwas genauer betrachtet, ist bevorzugt vorgesehen, dass auf dem Tragelement 7 wahlweise mindestens ein Wärmeübertrager 8, eine Ventileinrichtung 12 und/oder eine Expansionseinrichtung 9 angeordnet sind.

Weiterhin ist bevorzugt vorgesehen, dass eine Einheit aus dem Tragelement 7 und den darauf angeordneten Wärmepumpenkomponenten 2 eine erste Eigenfrequenz aufweist, die größer ist als die vom im Betriebsdrehzahlbereich arbeitenden Verdichter 1 an die starrkörperartig wirkende Einheit übertragene Störfrequenz erster Ordnung.

Dabei ist besonders bevorzugt vorgesehen, dass der Verdichter 1 einen Betriebsdrehzahlbereich von 700 bis 7200 Umdrehungen pro Minute, besonders bevorzugt von 800 bis 6900 Umdrehungen pro Minute, ganz besonders bevorzugt von 900 bis 6600 Umdrehungen pro Minute aufweist.

Außerdem ist besonders bevorzugt vorgesehen, dass die Einheit aus dem Tragelement 7 und den darauf angeordneten Wärmepumpenkomponenten 2 eine erste Eigenfrequenz von mehr als 100 Hz, besonders bevorzugt von mehr als 120 Hz, ganz besonders bevorzugt von mehr als 140 Hz aufweist.

Um auf die oben genannte Bedingung hinzuarbeiten, ist darüber hinaus besonders bevorzugt vorgesehen, dass (schon!) das Tragelement 7 eine erste Eigenfrequenz aufweist, die größer ist als die vom im Betriebsdrehzahlbereich arbeitenden Verdichter 1 verursachte Störfrequenz erster Ordnung.

Um noch weiter auf die oben genannte Bedingung hinzuarbeiten, ist darüber hinaus besonders bevorzugt vorgesehen, dass jede Wärmepumpenkomponente 2 eine erste Eigenfrequenz aufweist, die größer ist als die vom im Betriebsdrehzahlbereich arbeitenden Verdichter 1 verursachte Störfrequenz erster Ordnung.

Für den Fall, dass aufgrund einer entsprechenden Materialauswahl einer Verrohrung 2.1 der Wärmepumpenkomponenten 2 ebenfalls Handlungsbedarf besteht, ist weiterhin besonders bevorzugt vorgesehen, dass die Einheit einschließlich der Verrohrung 2.1 der Wärmepumpenkomponenten 2 eine erste Eigenfrequenz aufweist, die größer als die vom im Betriebsdrehzahlbereich arbeitenden Verdichter 1 an die starrkörperartig wirkende Einheit übertragene Störfrequenz erster Ordnung ist.

Mit anderen Worten ausgedrückt, ist also bevorzugt vorgesehen, dass im Grunde auf Basis der lokalen Eigenfrequenzen der einzelnen Komponenten eine gekoppelte Eigenfrequenz der gesamten Einheit bestimmt bzw. so ausgelegt wird, dass diese oberhalb der Störfrequenz erster Ordnung des Verdichters 1 liegt.

So ist zum Beispiel zur Erhöhung der lokalen Eigenfrequenz, wie in Figur 7 dargestellt, auch vorgesehen, dass das Tragelement 7 zur Vergrößerung seiner Eigenfrequenz (wie oben bereits zur Wärmepumpe gemäß den Figuren 2 bis 4 angeführt) als Platte mit einer Abkantung 7.1 ausgebildet ist. Darüber hinaus kann bevorzugt vorgesehen sein, dass das Tragelement 7 dicker als für die eigentliche Belastung erforderlich ausgebildet ist.

Wie aus Figur 7 ersichtlich, ist weiterhin bevorzugt vorgesehen, dass der Verdichter 1 über ein (typischer Weise - wie auch dargestellt - mehrere) elastische(s) Isolierelement(e) (Federelemente(e) 4) an dem Gehäuse 6 der Wärmepumpe befestigt ausgebildet ist. In vergleichbarer Weise ist ferner bevorzugt vorgesehen, dass das Tragelement 7 über ein (bzw. mehrere) elastische(s) Isolierelement(e) (Federelement(e) 5) am Gehäuse 6 der Wärmepumpe befestigt ausgebildet ist.

Dabei ist weiterhin besonders bevorzugt vorgesehen, dass das elastische Isolierelement mindestens teilweise aus einem Elastomer, vorzugsweise aus Polyurethanschaum, gebildet ist.

Weiterhin ist bevorzugt vorgesehen, dass der Verdichter 1 und die Einheit abgesehen von erforderlichen Fluidleitungen 3 zwischen dem Verdichter 1 und der Einheit unabhängig voneinander schwingfähig ausgebildet sind.

Schließlich ist, um für eine gleichmäßige Belastung des am Tragelement 7 angeordneten Isolierelements (bzw. der Isolierelemente) zu sorgen, besonders bevorzugt vorgesehen, dass ein Schwerpunkt der Einheit - durch geeignete Anordnung der Wärmepumpenkomponenten 2 - so gewählt ist, dass sich eine senkrechte Gewichtskrafteinleitung ins Isolierelement (bzw. in die Isolierelemente) ergibt.

### Bezugszeichenliste

- 1: Verdichter
- 2: Wärmepumpenkomponente
- 2.1: Verrohrung
- 3: Fluidleitung
- 3.1: Längsachse
- 4: Federelement
- 5: Federelement
- 6: Gehäuse
- 6.1: Unterseite
- 7: Tragelement
- 7.1: Abkantung
- 8: Wärmeübertrager
- 9: Expansionseinrichtung
- 10: Kältemittelsammler
- 11: Lastabtragelement
- 12: Ventileinrichtung
- 13.0: Anfangsrichtungsvektor
- 13.1: Richtungsvektor

- XY: Ebene, senkrecht zu XZ und YZ
- XZ: Ebene, senkrecht zu XY und YZ
- YZ: Ebene, senkrecht zu XY und XZ

## Patentansprüche

1. Wärmepumpe, umfassend einen Verdichter (1) zum Verdichten eines Kältemittels und eine weitere, vom Kältemittel durchströmte Wärmepumpenkomponente (2), wobei der Verdichter (1) zur Führung des Kältemittels über Fluidleitungen (3) mit der weiteren Wärmepumpenkomponente (2) verbunden ausgebildet ist und wobei der Verdichter (1) und die weitere Wärmepumpenkomponente (2) zur Reduktion einer Übertragung von Körperschall über Federelemente (4, 5) mit einem Gehäuse (6) der Wärmepumpe verbunden ausgebildet sind,
**dadurch gekennzeichnet,**
**dass** der Verdichter (1) und die weitere Wärmepumpenkomponente (2) miteinander ausschließlich einerseits über die sie verbindenden Fluidleitungen (3) und andererseits über die mit dem Gehäuse (6) der Wärmepumpe verbundenen Federelemente (4, 5) fest verbunden ausgebildet sind.

2. Wärmepumpe nach Anspruch 1,
**dadurch gekennzeichnet,**
**dass** die weitere Wärmepumpenkomponente (2) als Ventileinrichtung, insbesondere als Mehrwegeventil, ausgebildet ist.

3. Wärmepumpe nach Anspruch 1 oder 2,
**dadurch gekennzeichnet,**
**dass** die Federelemente (4, 5) mindestens teilweise aus einem Elastomer gebildet sind.

4. Wärmepumpe nach einem der Ansprüche 1 bis 3,
**dadurch gekennzeichnet,**
**dass** die weitere Wärmepumpenkomponente (2) auf einem Tragelement (7) positioniert ist.

5. Wärmepumpe nach Anspruch 4,
**dadurch gekennzeichnet,**
**dass** das Tragelement (7) über die Federelemente (5) mit dem Gehäuse (6) der Wärmepumpe verbunden ausgebildet ist.

6. Wärmepumpe nach Anspruch 4 oder 5,
**dadurch gekennzeichnet,**
**dass** noch weitere Wärmepumpenkomponenten der Wärmepumpe, wie ein Kondensator (8), eine Expansionseinrichtung (9) und/oder ein Kältemittelsammler (10), auf dem Tragelement (7) positioniert sind.

7. Wärmepumpe nach einem der Ansprüche 1 bis 6,
**dadurch gekennzeichnet,**
**dass** eine erste Fluidleitung (3) als Kältemittelzufuhrleitung zum Verdichter (1) und eine zweite Fluidleitung (3) als Kältemittelabfuhrleitung vom Verdichter (1) ausgebildet ist.

8. Wärmepumpe nach einem der Ansprüche 1 bis 7,
**dadurch gekennzeichnet,**
**dass** die Fluidleitungen (3) aus einem Material mit einer Steifigkeit wie ein metallisches Material gebildet sind.

9. Wärmepumpe nach einem der Ansprüche 1 bis 8,
**dadurch gekennzeichnet,**
**dass** die Fluidleitungen (3) aus einem metallischen Material gebildet sind.

## Claims

1. A heat pump, comprising a compressor (1) for compressing a coolant, and a further heat pump component (2), through which the coolant flows, wherein the compressor (1) is formed to be connected to the further heat pump component (2) in order to convey the coolant via fluid lines (3), and wherein the compressor (1) and the further heat pump component (2) are formed to be connected to a housing (6) of the heat pump via spring elements (4, 5) in order to reduce a transmission of structure-borne sound, **characterized in**
**that**, on the one hand, the compressor (1) and the further heat pump component (2) are formed to be firmly connected to one another exclusively via the fluid lines (3) connecting them and, on the other hand, via the spring elements (4, 5) connected to the housing (6) of the heat pump.

2. The heat pump according to claim 1,
**characterized in**
**that** the further heat pump component (2) is formed as valve means, in particular as multi-way valve.

3. The heat pump according to claim 1 or 2,
**characterized in**
**that** the spring elements (4, 5) are at least partially made of an elastomer.

4. The heat pump according to one of claims 1 to 3, **characterized in**
**that** the further heat pump component (2) is positioned on a carrying element (7).

5. The heat pump according to claim 4,
**characterized in**
**that** the carrying element (7) is formed to be connected to the housing (6) of the heat pump via the spring elements (5).

6. The heat pump according to claim 4 or 5,
**characterized in**
**that** further heat pump components of the heat pump, such as a condenser (8), an expansion means (9) and/or a coolant accumulator (10), are positioned on the carrying element (7).

7. The heat pump according to one of claims 1 to 6, **characterized in**
**that** a first fluid line (3) is formed as coolant supply line to the compressor (1) and a second fluid line (3) as coolant discharge line from the compressor (1).

8. The heat pump according to one of claims 1 to 7, **characterized in**
**that** the fluid lines (3) are made of a material with a stiffness comparable to a metallic material.

9. The heat pump according to one of claims 1 to 8, **characterized in**
**that** the fluid lines (3) are made of a metallic material.

## Revendications

1. Pompe à chaleur, comprenant un compresseur (1), destiné à compresser un agent de refroidissement et un autre composant (2) de pompe à chaleur, irrigué par l'agent de refroidissement, pour conduire l'agent de refroidissement, le compresseur (1) étant conçu en étant relié avec l'autre composant (2) de pompe à chaleur par l'intermédiaire de conduites de fluide (3) et pour réduire une transmission de bruit de structure, le compresseur (1) et l'autre composant (2) de pompe à chaleur étant reliés par l'intermédiaire d'éléments à ressort (4, 5) avec un carter (6) de la pompe à chaleur,
**caractérisée**
**en ce que** le compresseur (1) et l'autre composant(2) de pompe à chaleur sont fixement reliés l'un avec l'autre exclusivement d'une part, par l'intermédiaire des conduites de fluide (3) qui les relient et d'autre part, par l'intermédiaire des éléments à ressort (4, 5) reliés avec le carter (6) de la pompe à chaleur.

2. Pompe à chaleur selon la revendication 1,
**caractérisée**
**en ce que** l'autre composant (2) de pompe à chaleur est conçu sous la forme d'un dispositif de soupapes, notamment d'une soupape multivoies.

3. Pompe à chaleur selon la revendication 1 ou 2,
**caractérisée**
**en ce que** les éléments à ressort (4, 5) sont constitués au moins en partie en un élastomère.

4. Pompe à chaleur selon l'une quelconque des revendications 1 à 3,
**caractérisée**
**en ce que** l'autre composant (2) de pompe à chaleur est positionné sur un élément de support (7).

5. Pompe à chaleur selon la revendication 4,
**caractérisée**
**en ce que** l'élément de support (7) est conçu en étant relié par l'intermédiaire des éléments à ressort (5) avec le carter (6) de la pompe à chaleur.

6. Pompe à chaleur selon la revendication 4 ou 5,
**caractérisée**
**en ce qu'**encore d'autres composants de pompe à chaleur de la pompe à chaleur, comme un condensateur (8), un dispositif d'expansion (9) et / ou un collecteur (10) d'agent de refroidissement sont positionnés sur l'élément de support (7).

7. Pompe à chaleur selon l'une quelconque des revendications 1 à 6,
**caractérisée**
**en ce qu'**une première conduite de fluide (3) est conçue sous la forme d'une conduite d'alimentation d'agent de refroidissement vers le compresseur (1) et une deuxième conduite de fluide (3) est conçue sous la forme d'une conduite d'évacuation d'agent de refroidissement hors du compresseur (1).

8. Pompe à chaleur selon l'une quelconque des revendications 1 à 7,
**caractérisée**
**en ce que** les conduites de fluide (3) sont constituées dans une matière d'une rigidité comme celle d'une matière métallique.

9. Pompe à chaleur selon l'une quelconque des revendications 1 à 8,
**caractérisée**
**en ce que** les conduites de fluide (3) sont constituées dans une matière métallique.
